# EUROPÄISCHE PATENTSCHRIFT

(11) **EP 2 922 687 B1**
(45) Veröffentlichungstag und Bekanntmachung des Hinweises auf die Patenterteilung: **03.03.2021**
(21) Anmeldenummer: 13807898.5
(22) Anmeldetag: 21.11.2013
(51) Int. Cl.: B29C 64/153, B29C 64/165, B29C 64/35, B29C 64/357, B29C 64/141, B33Y 10/00, B33Y 30/00

(54) **AUFBAU EINES 3D-DRUCKGERÄTES ZUR HERSTELLUNG VON BAUTEILEN**
CONSTRUCTION OF A 3D PRINTING DEVICE FOR PRODUCING COMPONENTS
CONCEPTION D'UN APPAREIL D'IMPRESSION EN 3D POUR LA PRODUCTION DE PIÈCES

(30) Priorität: 25.11.2012 DE 102012022859
(43) Veröffentlichungstag der Anmeldung: 30.09.2015
(73) Patentinhaber: Voxeljet AG, 86316 Friedberg (DE)
(72) Erfinder: EDERER, Ingo, 82269 Geltendorf (DE); HARTMANN, Andreas, Dominik, 86391 Stadtbergen (DE); SCHMID, Dominik, 86165 Augsburg (DE)
(74) Vertreter: Helbig, Christian
(86) Internationale Anmeldenummer: PCT/DE2013/000685
(87) Internationale Veröffentlichungsnummer: WO 2014/079404

(56) Entgegenhaltungen:
- DE-A1-102009 056 696
- DE-A1-102010 015 451
- Armin Scharf: "Erster 3D-Endlosdrucker", zwomp.de , 6. November 2012 (2012-11-06), XP002721096, Gefunden im Internet: URL:http://www.zwomp.de/2012/11/06/voxelje t-endlosdrucker/ [gefunden am 2014-03-04]

## Beschreibung

Die Erfindung betrifft eine Vorrichtung sowie ein Verfahren zum schichtweisen Aufbau von dreidimensionalen Modellen.

In der europäischen Patentschrift EP 0 431 924 B1 wird ein Verfahren zur Herstellung dreidimensionaler Modelle aus Computerdaten beschrieben. Dabei wird ein erstes Material, hier ein Partikelmaterial, in einer dünnen Schicht auf eine gegebenenfalls mit einem Behälter umfassten Bauplattform aufgetragen und darauf anschließend ein zweites Material aufgebracht, das mit dem ersten Material einen Festkörper bilden kann. Gemäß der EP 0 431 924 B1 ist beispielsweise als erstes Material ein Partikelmaterial vorgesehen und dieses wird anschließend selektiv mittels eines Druckkopfes mit einem Bindermaterial bedruckt. Der mit dem Binder bedruckte Partikelbereich verklebt und verfestigt sich unter dem Einfluss des Binders und gegebenenfalls eines zusätzlichen Härters. Anschließend wir die Plattform um eine Schichtdicke in einen Bauzylinder abgesenkt und mit einer neuen Schicht Partikelmaterial versehen, die ebenfalls, wie oben beschrieben, bedruckt wird. Diese Schritte werden wiederholt, bis eine erwünschte Höhe des Modells erreicht ist. Aus den bedruckten und verfestigten Bereichen entsteht so ein dreidimensionales Modell.

Das aus verfestigtem Partikelmaterialhergestellte Modell ist nach seiner Fertigstellung in losem Partikelmaterial eingebettet und wird anschließend davon befreit.

In ähnlicher Weise arbeiten auch andere Pulver-gestützte Rapid-Prototyping-Prozesse, wie z.B. das selektive Lasersintern oder das Elektron-Beam-Sintern, bei denen jeweils ebenso ein loses Partikelmaterial schichtweise ausgebracht und mit Hilfe einer gesteuerten physikalischen Strahlungsquelle selektiv verfestigt wird.

Im Folgenden werden alle diese Verfahren unter dem Begriff "dreidimensionale Druckverfahren" oder 3D-Druckverfahren zusammengefasst.

Aus der WO2011/127897A2 ist ein weiteres Verfahren zum Aufbauen eines Schichtkörpers aus losem Partikelmaterial bekannt. Der Bauprozess erfolgt nach dem Prinzip "Continuous 3D-Printing" und ist eine weitere Variante des pulververarbeitenden 3D-Druckverfahrens.

Mit einem endlosen horizontalen Schichtvorschub ist es möglich, kontinuierlich Bauteile, auch als Formteile bezeichnet, zu produzieren.

Beim Continuous 3D-Printing ist die Bauteillänge nahezu unbegrenzt.

Bei konventionellen Anlagen werden die Bauteile schichtweise vertikal von oben nach unten hergestellt. Überschreitet die Bauteilgröße die anlagenspezifisch vorgegebene Bauhöhe muss das Bauteil segmentiert und in mehreren Bauprozessen hergestellt werden. Dazu müssen nacheinander die fertig gestellten Bauteile aus der Anlage entfernt werden und passgenau aufeinander gesetzt und verklebt werden. In Bezug auf Größe und Produktivität ist hier das Erstellen von großen Bauteilen eingeschränkt.

Beim Continuous 3D-Printing erfolgt der Schichtvorschub in horizontaler Richtung mit einem endlosen Förderband. Da die Schwerkraft einen Schichtauftrag senkrecht zum Schichtvorschub verhindert werden die einzelnen Schichten räumlich schräg zur Senkrechten aufgetragen. Der Winkel ist so gewählt, dass er kleiner als der spezifische Schüttwinkel des entsprechenden Pulvermaterials ist.

Der Bauebene schließt sich eine umschlossene Förderstrecke an, deren Länge z.B. der verfahrensabhängigen Aushärtedauer angepasst ist. Am Ende der Förderstrecke gelangen die fertigen Bauteile in einen Entnahmebereich oder Entpackbereich. Dort werden die Bauteile von ungebundenem Pulvermaterial befreit und entnommen, ohne dass die Herstellung weiterer Teile unterbrochen werden muss. Bei besonders langen Teilen kann dieser Bereich z.B. mit Rollenbahnen erweitert werden.

Die bekannten Vorrichtungen und Verfahren zum schichtweisen Aufbau von Modellen, auch als Formteile bezeichnet, weisen allerdings baubedingte Nachteile auf, die zu Ungenauigkeiten oder Fehlern in den Formteilen bei deren Herstellung führen können. Z.B. wird in bekannten Vorrichtungen und Verfahren der Beschichter nach dem Beschichtungsvorgang über die beschichtete Ebene zurückgefahren. Dabei kann es dazu kommen, dass sich vom Beschichter ungewollt Partikelmaterial löst und auf die Bauebene (Baufeld) fällt. Somit kommt an Stellen Partikelmaterial zu liegen, an denen es nicht vorgesehen ist. Dadurch kann es zu einer Kollision zwischen Druckkopf und einer so entstanden Partikelmaterialanhäufung kommen. Dies kann sowohl den Druckkopf als auch das Baufeld und damit die Bauteile beschädigen.

Gleichermaßen ungünstig ist es, wenn Flüssigkeiten unkontrolliert auf das Baufeld gelangen. Diese können das Baufeld und damit den herzustellenden Formkörper beschädigen und bis zur Unbrauchbarkeit der hergestellten Formteile führen.

Es bestand also lange ein Bedürfnis, die genannten Nachteile des Standes der Technik zu vermeiden oder zumindest zu vermindern.

Aufgabe der vorliegenden Erfindung ist es deshalb, eine Vorrichtung und ein Verfahren zur Verfügung zu stellen, die die Nachteile des Standes der Technik vermeiden oder jedenfalls verbessern, und mit der das Verfahren zur Herstellung von Formteilen verbessert durchgeführt werden kann.

Die erfindungsgemäße Aufgabe wird gelöst durch die Vorrichtung gemäß Anspruch 1 und das Verfahren gemäß Anspruch 9. Bevorzugte Ausführungsformen sind in den Unteransprüchen verwirklicht.

Insbesondere betrifft die Erfindung eine Vorrichtung und ein Verfahren zum Herstellen dreidimensionaler Modelle oder Formteile, wobei die Vorrichtung durch eine vorteilhafte Anordnung der Funktionseinheiten gekennzeichnet ist. Insbesondere kommt dieser erfindungsgemäße Anlagenaufbau beim Schrägbettverfahren des 3D Druckens zum Einsatz.

Die verschiedenen Aspekte der Erfindung sind im Folgenden näher dargestellt.

In einem Aspekt ist die Erfindung eine Vorrichtung nach Anspruch 1.

Es können alle bekannten Beschichter eingesetz werden, die geeignet sind, den Erfindungsgedanken zu verwirklichen. Der Beschichter kann jeder Beschichter sein, der entgegen der Beschichtungsrichtung ein Nivellierelement aufweist oder ein gleichwirkendes Mittel. Somit wird verhindert, dass Partikelmaterial nach unten in Richtung Druckkopf abrutschen bzw. fallen kann. Dabei können jedwede Ausgestaltungen zum Einsatz kommen, die das aufzutragende Partikelmaterial nach oben schieben, wie Rollen, Klingen, Lippen etc. und ein beschriebenes Abrutschen des Partikelmaterials verhindern.

Die spezielle Anordnung von Druckkopf und Beschichter sind beim Betrieb der Anlage besonders vorteilhaft, da der Druckkopf und der Beschichter die Peripherieeinheiten nach jedem Arbeitsvorgang sofort anfahren können. Weiterhin kann mit dieser Anordnung zunächst beim Hochfahren des Beschichters eine neue Schicht Partikelmaterial auf das Baufeld aufgetragen werden. "Hochfahren" bedeutet im Sinn der Erfindung, dass der Beschichter sich in einem schrägen Winkel zur Horizontalen über das Baufeld nach oben bewegt. Dabei wird vermieden, dass Partikelmaterial über das Baufeld fallen kann. Beim Abwärtsverfahren kann dann der Druckkopf die Bereiche bedrucken, die zur Herstellung des Formteiles verfestigt werden sollen. "Abwärtsfahren" im Sinne der Erfindung bedeutet, dass der Druckkopf in einem schrägen Winkel zur Horizontalen und parallel zum Baufeld entgegen der Beschichtungsrichtung nach unten fährt. Somit wird vermieden, dass es zu einer unerwünschten Ablage von Partikelmaterial auf dem Baufeld kommt, wodurch die Partikelschicht uneben würde und der Druckkopf mit derartigen Ablagerungen kollidieren könnte.

Weiterhin umfasst die erfindungsgemäße Vorrichtung eine Beschichterreinigungseinheit (3), eine Beschichterbefüllungseinheit (4), eine zentrale Partikelmaterialversorgungseinheit (6), ein Förderband (7), eine Inspektionseinheit (10), eine Druckkopfreinigungseinheit mit Spittingstation (11), eine Cappingstation (12), eine Tropfenschranke (13), einen Sammeltrichter (14), eine Förderstrecke für überschüssiges Partikelmaterial (15), einen Sammeltrichter im Entpackbereich (16) und/oder eine oder mehrere Rinnen (19).

In einer bevorzugten Ausführungsform sind die Einheiten der Beschichterperipherieeinheiten, vorzugsweise die Beschichterreinigungseinheit (3), die Beschichterbefüllungseinheit (4) und die zentrale Partikelmaterialversorgungseinheit (6), oben in Beschichtungsrichtung, besonders bevorzugt hinter dem Baufeld, angeordnet.

Vorzugsweise sind die Einheiten der Druckkopfperipherie, vorzugsweise eine Inspektionseinheit (10), eine Druckkopfreinigungseinheit mit Spittingstation (11), eine Cappingstation (12), unten in Beschichtungsrichtung, besonders bevorzugt unterhalb des Baufeldes, angeordnet.

Mit der erfindungsgemäßen Vorrichtung kann eine zentrale Partikelmaterialförderung oberhalb des Baufelds zur automatischen Erstellung der Startschüttung angeordnet sein. Weiterhin können Sammeltrichter zum Auffangen von überschüssigem Partikelmaterial unterhalb der Vorrichtung (Anlage) angeordnet sein. Vorzugsweise ist ein Sammeltrichter vorne unter dem Baufeld zum Sammeln des überschüssigen bzw. herabfallenden Partikelmaterials angeordnet. Vorzugsweise ist ein weiterer Sammeltrichter unterhalb des Entpackbereiches angeordnet.

Vorzugsweise münden die Sammeltrichter nach unten zu einer Förderstrecke, die das Partikelmaterial weiterbefördert und auch an der Maschinenunterseite angeordnet ist. Das so gesammelte Partikelmaterial kann dann wieder verwendet werden. Eine "Sammelstrecke" im Sinn der Erfindung ist jedes geeignete Mittel, um das so gesammelte Partikelmaterial in eine Richtung, vorzugsweise in einen Rezyklisierungsbehälter, zu transportieren. Beispielsweise kann eine Schneckenförderung zum Einsatz kommen.

Vorzugsweise weist die Förderstrecke eine zentrale Förderleitung auf, die zum Entleeren der Sammeltrichter an der Frontseite der Vorrichtung und des Sammeltrichters des Entpackbereichs dient.

In einem weiteren Aspekt betrifft die Erfindung ein Verfahren nach Anspruch 9 zum Herstellen dreidimensionaler Modelle, wobei eine erfindungsgemäße Vorrichtung nach einem der oben beschriebenen Aspekte verwendet wird. In einem erfindungsgemäßen Verfahren kann eine Startschüttung mit der Vorrichtung erstellt werden. Eine "Startschüttung" ist erforderlich, um ein Anfahren des Herstellungsprozesses zu ermöglichen und eine Startfläche aus Partikelmaterial bereitzustellen, auf die die Beschichtung mit Partikelmaterial und anschließendes Drucken mit dem Druckkopf erfolgen kann.

In einer bevorzugten Ausführung der Erfindung trägt ein Beschichter dünne Schichten eines Partikelmaterials auf. Dazu fährt er entlang eines Linearantriebssystems.

Der Beschichter besteht vorzugsweise aus einem Trichter mit einer spaltförmigen Öffnung in der Nähe der Beschichtungsebene. Der Abwurfspalt des Beschichters zeigt dann vorzugsweise in Beschichtungsrichtung. Aus diesem Spalt, tritt bei Anregung des Beschichters Partikelmaterial auf die Beschichtungsebene aus. Als Beschichter eignen sich daneben Walzen- oder Klingen-Beschichter oder Kombinationen davon. Bei allen Typen ist es vorteilhaft, wenn der Schichtauftrag in Richtung der ansteigenden Beschichtungsebene erfolgt und nicht andersherum, da so verhindert werden kann, dass das vor dem Beschichter liegende Partikelmaterial über die Beschichtungsebene abrutscht. Mit dieser erfindungsgemäßen Ausrichtung des Beschichters wird vorteilhafter Weise auch erreicht, dass die Beschichtung sehr gleichmäßig wird und stabil bleibt. Auch wird so vermieden, dass es zu ungewollten und nachteiligen Wechselwirkungen von für die Beschichtung vorgesehenem Material und überschüssigem Material kommt.

Der Druckkopf fährt vorzugsweise an einem orthogonalen Linearsystem montiert das Baufeld im Rasterverfahren ab. Im Rasterverfahren unterscheidet man die Richtung in der ein druckkopfbreiter Streifen erzeugt wird (Druckachse) und die Richtung in der der Druckkopf um eine Streifenbreite versetzt wird (Druckkopfpositionierachse). Der Druckkopf verfährt dabei vorzugsweise mäanderförmig nach unten.

Vorzugsweise wird ein üblicher und an das Partikelmaterial angepasster Binder verwendet. Partikelmaterial - Binder - Kombinationen sind allgemein bekannt und deren explizite Nennung erübrigt sich somit.

Vorzugsweise kann der Druckkopf auch durch eine Strahlenquelle oder ein anderes geeignetes Mittel für einen energiereichen Strahleneintrag ersetzt sein. Die Vorrichtung wird dann in ihren übrigen Bauteilen entsprechend angepasst.

In der vorliegenden Erfindung wird der Druckkopf vorzugsweise in Beschichtungsrichtung positioniert und orthogonal dazu gedruckt. Weiter zeichnet sich die vorliegende Erfindung dadurch aus, dass die Druckachse zusammen mit dem Beschichter an einem gemeinsamen Achsenpaar verfährt. Das heißt, die Druckkopfpositionierachse ist gleichzeitig die Beschichterachse.

Im Bauprozess der vorliegenden Erfindung wird zunächst von unten nach oben eine Schicht Partikelmaterial aufgetragen. Anschließend fährt der Druckkopf von oben nach unten, entgegen der Beschichtungsrichtung das Baufeld im Rasterverfahren ab und trägt dabei feinste Tröpfchen aus Binder auf. Alternativ kann ein baufeldbreiter Druckkopf montiert werden, der das gesamte Baufeld in einer Überfahrt bedruckt. Der Druckvorgang würde dann bei der Fahrt der Druckkopf-Beschichtereinheit zum unteren Rand des Baufeldes erfolgen.

Bei der vorgeschlagenen Vorrichtung fährt der Beschichter während der Rasterfahrt des Druckkopfes ein weiteres Mal über das Baufeld ohne eine Schicht aufzutragen. Der Druckkopf fährt dann bei dem Druckvorgang vor dem Beschichter. Sollte es zu ungewolltem Herunterfallen von Partikelmaterial kommen, kann diese dann den Druckvorgang nicht stören. Somit wird erfindungsgemäß vorteilhaft erreicht, dass die herzustellenden Formteile in ihrer Präzision sehr hochwertig sind. Erfindungsgemäß ist die Abwurföffnung des Beschichters in Beschichtungsrichtung ausgerichtet und liegt die Druckachse hinter dem Beschichter. Der Druckkopf ist somit entgegen der Beschichtungsrichtung angeordnet, d.h. im Verhältnis zu dem schräg angeordneten Baufeld ist der Beschichter im Verhältnis zu der Druckachse und dem Druckkopf oben angeordnet, wobei die Abwurföffnung und der Druckkopf im wesentlichen entgegengesetzt ausgerichtet sind. In einer bevorzugten Ausführungsform können auch die Peripheriegeräte für Druckkopf, d.h. beispielsweise Inspektionseinheit (10), Druckkopfreinigungseinheit (11), Cappingstation (12) und Tropfenschranke (13) im unteren Bereich der Vorrichtungsebene angeordnet werden. Dadurch sind diese leicht für den Bediener zugänglich und damit bedienerfreundlich angeordnet.

Die Beschichterreinigungseinheit (3) und die Beschichterbefüllungseinheit (4) sind vorzugsweise oben an der Vorrichtung angeordnet, vorzugsweise vor dem Baufeld.

Diese Anordnung hat auch den Vorteil, dass nach jedem Zyklus des Beschichtens und Druckens die Funktionseinheiten Beschichter und Druckkopf zu den Peripheriegeräten gefahren werden können, um ihre einwandfreie Arbeitsweise kontrollieren zu können. Dies erhöht in zeitsparender Weise die Qualität der herzustellenden Formteile. Es ist dabei vorgesehen, dass individuell gesteuert werden kann, wie oft der Beschichter bzw. der Druckkopf zu den Periperieeinheiten während des Druckvorganges gefahren wird. Dies kann nach jedem Beschichtungs- bzw. Druckvorgang oder in längeren Intervallen erfolgen, z.B. nach jedem zweiten oder vierten Mal.

Die Peripheriegeräte des Beschichters umfassen alle Funktionen zur Intakt-Haltung des Beschichters während und zwischen den Bauprozessen.

Die Peripheriegeräte des Druckkopfes sind vorzugsweise: Reinigungsstation, Cappingstation, Tropfenschranke, Spittingstation, Tropfenwaage und Inspektionseinheit.

In der Reinigungsstation wird die Düsenplatte der Druckkopfunterseite während einer speziellen Überfahrt aktiv von unten z.B. mit einer rotierenden Schwammwalze gereinigt.

Die Cappingstation verschließt die Düsenplatte an der Druckkopfunterseite durch einen ausfahrenden Stempel und schützt ihn so vor Verschmutzung und Austrocknung zwischen den Bauprozessen.

Die Tropfenschranke untersucht die Düsenplatte der Druckkopfunterseite während einer speziellen Überfahrt aktiv mit einer Lichtschranke auf Anhaftungen wie Tropfen oder Fremdkörper und veranlasst bei Bedarf eine Reinigung des Druckkopfes.

Die Spittingstation fängt Tropfen und Dämpfe des Druckkopfs auf, wenn dieser sich zur inneren Reinigung freispritzt.

Die Tropfenwaage liefert die entsprechende Information zur Modularisierung der Tropfengröße.

Die Inspektionseinheit ist ein spezieller Zugang im System, der eine Inspektion der Druckkopfunterseite und Testdrucke auf Papier ermöglicht.

Die gesamten Peripheriegeräte, die die Funktion des Druckkopfes unterstützen, sind an der erfindungsgemäßen Vorrichtung, die man auch als Anlage bezeichnen kann, vorne unten angebracht und so für den Bediener gut zugänglich. Durch die Anordnung der Druckkopfperipherie an dieser Stelle kann die Fluidversorgung vorteilhaft angeordnet werden.

Havarien des Fluidsystems oder Flüssigkeiten, die beim Bedienen ausgetauscht werden müssen, werden so nach unten abgeleitet und können sich nicht über dem Baufeld und den Maschinenantrieben verteilen. So wird vermeiden, dass derartige Flüssigkeiten das Baufeld beschädigen oder den Druckkopf oder den Beschichter verunreinigen. Die Zuleitung zur Fluidversorgung kann somit auch kurzgehalten werden.

Die Beschichterperipherie besteht aus der Beschichterbefüllung und der Beschichterreinigung. Die Beschichterbefüllung ist vorteilhafter Weise oberhalb des oberen Baufeldrandes angeordnet.

Während des Bauprozesses trägt der Beschichter einen gewissen Vorrat an Partikelmaterial mit sich. Der Vorrat muss von Zeit zu Zeit von der Beschichterbefüllung mit Partikelmaterial nachgefüllt werden. Im Bauprozess kann sich die Beschichterunterseite bzw. der Beschichterabwurfspalt mit der Zeit so verschmutzen, dass der Beschichter keine einwandfreien Schichten mehr auflegen kann. Gleichzeitig kann der Abwurfspalt verschmutzen.

Die Vorrichtung umfasst somit vorzugsweise eine Beschichterreinigung. Diese reinigt die Beschichterunterseite samt Abwurfspalt mit einer Bürste die den Beschichter quer zur Beschichtungsrichtung abfährt.

Sowohl während der Befüllvorgang des Beschichters als auch während dessen Reinigung fällt Partikelmaterial vom Beschichter herab.

Mit der erfindungsgemäßen Vorrichtung wird vorteilhafter Weise vermieden, dass herabfallendes Partikelmaterial auf das Baufeld gelangt.

Durch die erfindungsgemäße Anordnung der Beschichterperipherie oberhalb des Baufeldes fallen die Pulverreste auf die bereits fertiggestellte Schüttung und werden so gefahrlos abtransportiert.

Die Beschichterbefüllung wird vorzugsweise zentral über eine Abwurfstelle oben hinter dem Baufeld mit Partikelmaterial versorgt. Durch diese Abwurfstelle ist es möglich, die für den Bauprozess notwendige Startschüttung vollautomatisch zu erzeugen. Alternativ zur erfindungsgemäßen automatischen Herstellung der Startschüttung müssten sonst Blöcke, schräg gestellte Platten eingelegt oder das Partikelmaterial von Hand aufgetragen werden, damit die Startschicht und die darauf folgenden Schichten im vorgeschriebenen Winkel aufgetragen werden können.

Durch die zentrale Anordnung der Abwurfstelle werden die Transportwege des Partikelmaterials kurz gehalten und können störungsfrei außerhalb der Anlage laufen.

Durch das Kurzhalten der Förderstrecke wird das frische Partikelmaterial als auch die Fördereinrichtung geschont.

Während dem Bauprozess fällt prozessbedingt beim Beschichten seitlich des Baufelds und unterhalb des Baufelds Partikelmaterial an, das entsorgt werden muss.

In einer bevorzugten Ausführungsform wird dieses Partikelmaterial seitlich des Baufelds in Rinnen gesammelt, die gegenüber der Bauebene soweit steiler gestellt sind, dass darin befindliches Partikelmaterial aufgrund der Schwerkraft nach unten rutscht. Vorzugsweise befindet sich unterhalb des Baufeldes ein zentraler Behälter, in den die beiden seitlichen Rinnen münden, sodass die Partikelmaterialreste dort gesammelt werden können. Besonders bevorzugt ist dieser Behälter dazu mit einer Öffnung entlang der unteren Baufeldkante versehen, sodass dort auch Partikelmaterialreste gesammelt werden, die z.B. mit dem Beschichter über das Baufeld in den Behälter gefördert werden.

Vorzugsweise wird der zentrale Behälter über eine Förderstrecke, z.B. Förderspirale oder Förderschnecke an der Anlagenunterseite aus der Anlage hinaus gefördert.

Diese Förderstrecke kann auch Partikelmaterialreste, die beim Entpackvorgang hinter der Anlage entstehen mitfördern. So werden Förderstrecken reduziert und eine Reinhaltung des Bauprozess garantiert.

Ein besonders bevorzugter Aspekt der Erfindung ist die Kombination von zentraler Partikelmaterialversorgung, die den Beschichter kontinuierlich befüllt. Vorteilhafter Weise kann hiermit auch die Startschüttung hergestellt werden, sodass ein manuelles Herstellen der Startschüttung wie es bisher notwendig war, entfällt. Dies ist unter anderem unter Zeitersparnis und Handhabbarkeit des Verfahrens von großem Vorteil.

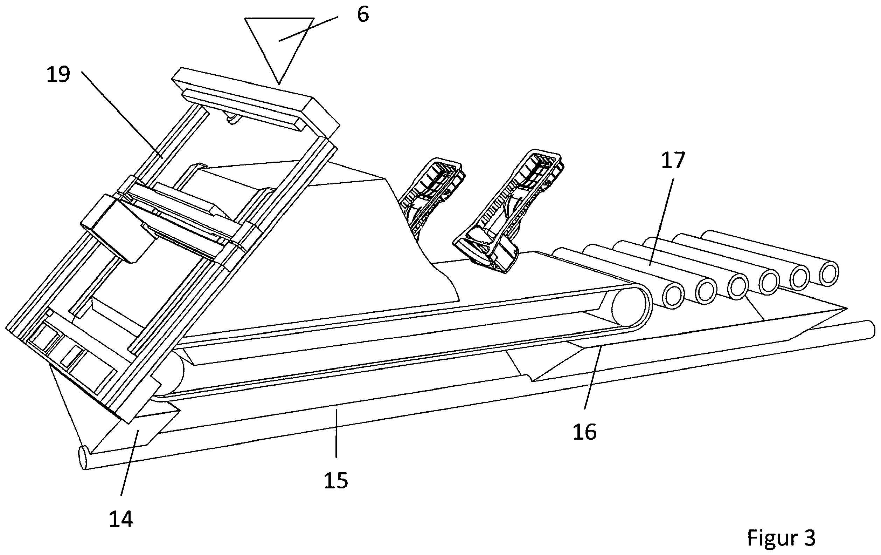

Ein weiterer vorteilhafter Aspekt der Erfindung ist die Anbringung einer Entsorgungseinrichtung, mit der es möglich ist, nicht nur herabfallendes Partikelmaterial zu sammeln und wieder in den Herstellungsprozess einzubringen, sondern auch die Partikelmaterialreste aus dem Entpackschritt gemeinsam der Wiederverwertung bei dem Verfahren zuzuführen. Hierbei werden vorzugsweise Sammeltrichter an der Vorderseite der Vorrichtung, unterhalb der Vorrichtung und unterhalb des Entpackbereiches angebracht, die mit einer gemeinsamen Förderstrecke versehen sind, die das zu rezyklisierende Material einem Rezyklisierungsbehälter zuführt. Vorzugsweise wird das so wieder gewonnene Partikel Behandlungsschritten unterzogen, die es von prozessbedingten Verunreinigungen befreien. Danach wird es wieder in das 3D Druckverfahren eingespeist. Ein derartiger Aufbau ist beispielsweise in Figur 3 dargestellt.

Die Erfindung betrifft auch ein Verfahren zum Herstellen von dreidimensionalen Modellen (Formkörpern).

Ein besonderer Vorteil des erfindungsgemäßen Verfahrens ist, dass beim Anfahren die Anfangsschüttung nicht von Hand hergestellt werden muss, sondern aufgrund der besonderen Konstruktion der Vorrichtung ein automatisches Anfahren möglich ist. Bisher war es nötig die Anfangsschüttung von Hand aufzubauen, damit der 3D Prozess mit schichtweisem Aufbau starten konnte. Diesen Nachteil konnte die erfindungsgemäße Vorrichtung und Verfahren überwinden und so ein schnelleres und unkomplizierteres Verfahren bereitstellen.

Bevorzugte Ausführungsformen sind in den Figuren dargestellt:

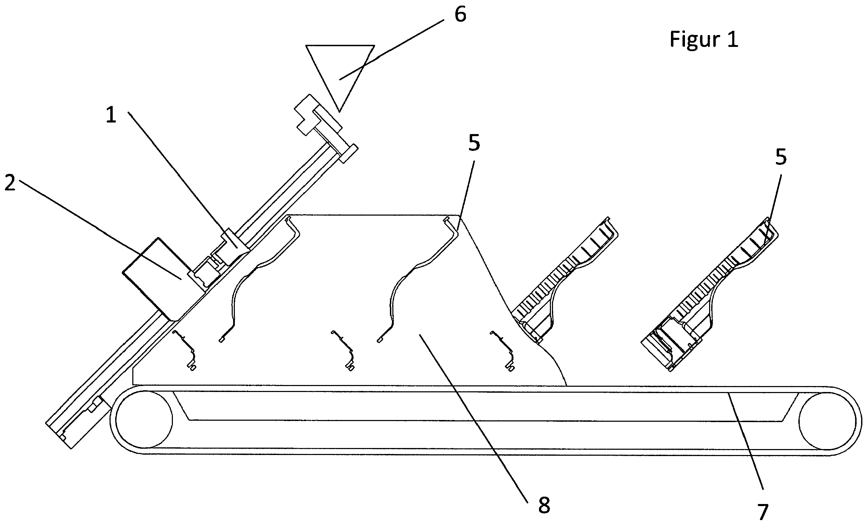

Figur 1 zeigt das Funktionsprinzip des Continuous 3D-Printing. Die linke Seite zeigt die Maschinenvorderseite mit dem Baufeld, auf dem die Bauteile schichtweise erzeugt werden. Der Auftrag der einzelnen Schichten geschieht in einem Winkel der kleiner ist als der spezifische Schüttwinkel des verarbeiteten Partikelmaterials. Das Förderband (7) bewegt die Schüttung (8) nach rechts zur Maschinenrückseite. Hier können fertig gebaute Bauteile entnommen werden.

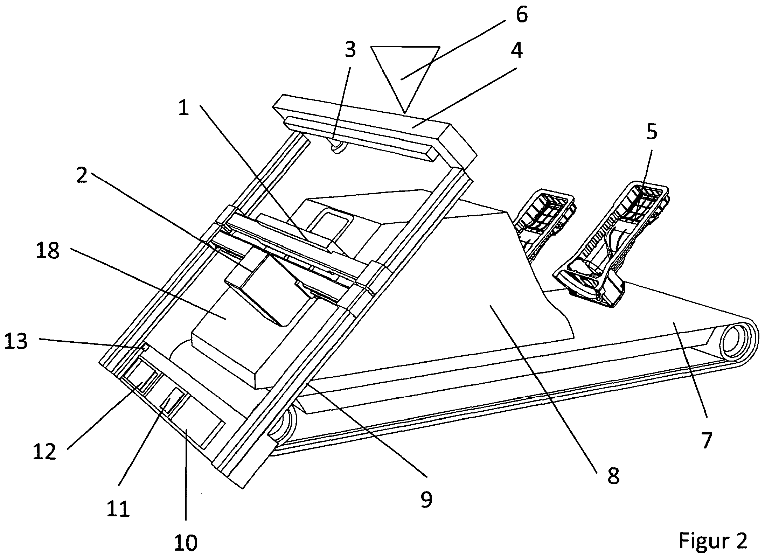

Figur 2 zeigt den bevorzugten Aufbau der Erfindung. Das Achssystem (9), das den Druckkopf positioniert, ist links und rechts neben dem Baufeld (18) an der Maschinenvorderseite angeordnet. Oben hinter dem Baufeld befinden sich die Beschichterbefüllung (4) und Beschichterreinigung (3). Überschüssiges Partikelmaterial aus dem Reinigungs- bzw. Befüllvorgang des Beschichters fallen problemlos auf die Schüttung.
   Hinter der Beschichterbefüllung befindet sich zentral die Partikelmaterialversorgung (14). Diese kann entweder die Beschichterbefüllung (4) mit Partikelmaterial versorgen oder vor Beginn eines Baujobs vollautomatisch die notwendige Startschüttung erzeugen. Unterhalb des Baufelds befindet sich gut zugänglich die Druckkopfperipherie.
Figur 3 zeigt die Entsorgungswege des überflüssigen Partikelmaterials. Links und rechts neben dem Baufeld (18) befinden sich Rinnen (19) die überschüssiges Partikelmaterial aus dem Bauprozess sammeln und in den Sammeltrichter an der Frontseite (14) leiten. Die Förderstrecke (15) läuft an der Anlagenunterseite und fördert den Sammeltrichter (14) leer. Die Förderstrecke entleert auch die Sammeltrichter (16) aus dem Entpackbereich an der Maschinenrückseite.

### Bezugszeichenliste

- 1.: Beschichter
- 2.: Druckkopf
- 3.: Beschichterreinigung
- 4.: Beschichterbefüllung
- 5.: Fertiges Bauteil
- 6.: Zentrale Partikelmaterialversorgung
- 7.: Förderband
- 8.: Schüttung
- 9.: Achssystem
- 10.: Inspektionseinheit
- 11.: Druckkopfreinigung mit Spittingstation
- 12.: Cappingstation
- 13.: Tropfenschranke
- 14.: Sammeltrichter Frontseite
- 15.: Förderstrecke Abfall
- 16.: Sammeltrichter Entpackbereich
- 17.: Rollenbahn des Entpackbereichs
- 18.: Baufeld
- 19.: Rinnen

## Patentansprüche

1. Vorrichtung zum Herstellen dreidimensionaler Modelle umfassend einen Beschichter (1) mit einer Abwürföffnung und mindestens einen Druckkopf (2), der an einer Druckachse angebracht ist, wobei sich der Beschichter bei einer Beschichtungsfahrt in Beschichtungsrichtung und in Richtung des Hochfahrens in einem schrägen Winkel zur Horizontalen über das Baufeld nach oben bewegt, wobei die Abwurföffnung des Beschichters oben in Beschichtungsrichtung und in Richtung des Hochfahrens angeordnet ist und der Druckkopf in entgegengesetzter Ausrichtung an der Druckachse in Beschichtungsrichtung hinter dem Beschichter entgegen der Beschichtungsrichtung und in Richtung des Abwärtsfahrens angeordnet ist,
**dadurch gekennzeichnet, dass**
der Druckkopf und der Beschichter an einem gemeinsamen Achsenpaar angeordnet sind.

2. Vorrichtung nach Anspruch 1 weiterhin umfassend eine Beschichterreinigungseinheit (3), eine Beschichterbefüllungseinheit (4), eine zentrale Partikelmaterialversorgungseinheit (6), ein Förderband (7), eine Inspektionseinheit (10), eine Druckkopfreinigungseinheit mit Spittingstation (11), eine Cappingstation (12), eine Tropfenschranke (13), einen Sammeltrichter (14), eine Förderstrecke Abfall (15), einen Sammeltrichter Entpackbereich (16) und/oder eine oder mehrere Rinnen (19).

3. Vorrichtung nach Anspruch 2, wobei Einheiten der Beschichterperipherieeinheiten, die die Beschichterreinigungseinheit (3), die Beschichterbefüllungseinheit (4) und/oder die zentrale Partikelmaterialversorgungseinheit (6) umfassen, oben in Beschichtungsrichtung, besonders bevorzugt hinter dem Baufeld, angeordnet sind.

4. Vorrichtung nach einem der Ansprüche 2 oder 3, wobei Einheiten der Druckkopfperipherieeinheiten, die die Inspektionseinheit (10), die Druckkopfreinigungseinheit mit Spittingstation (11) und/oder die Cappingstation (12), unten in Beschichtungsrichtung, besonders bevorzugt unterhalb des Baufeldes, angeordnet sind.

5. Vorrichtung nach einem der Ansprüche 2, 3 oder 4, wobei die zentrale Partikelmaterialförderung oberhalb des Baufelds zur automatischen Erstellung der Startschüttung angeordnet ist.

6. Vorrichtung nach einem der vorhergehenden Ansprüche, wobei ein Sammeltrichter vorne unter dem Baufeld zum Sammeln des überschüssigen Partikelmaterials angeordnet ist.

7. Vorrichtung nach einem der vorhergehenden Ansprüche, wobei eine Förderstrecke für überschüssiges Partikelmaterial an der Maschinenunterseite angeordnet ist.

8. Vorrichtung nach Anspruch 7, wobei die Förderstrecke eine zentrale Förderleitung aufweist, die zum Entleeren der Sammeltrichter an der Frontseite und des Sammeltrichters des Entpackbereichs dient.

9. Verfahren zum Herstellen dreidimensionaler Modelle, wobei eine Vorrichtung nach einem der Ansprüche 1 bis 8 verwendet wird.

10. Verfahren nach Anspruch 9, wobei eine Startschüttung mit der Vorrichtung nach Anspruch 5 erstellt wird.

## Claims

1. A device for producing three-dimensional models, comprising a coater (1) with an ejection opening and at least one print head (2) mounted on a print axis, wherein
the coater moves upward over the construction field during a coating pass in the coating direction and in the lifting direction at an inclined angle with respect to the horizontal, with the ejection opening being disposed at the top in the coating direction and in the lifting direction and the print head being oriented in opposite alignment in the coating direction on the print axis disposed behind the coater opposite to the coating direction and in the lowering direction,
**characterised in that**
the print head and the coater are disposed on a common axis pair.

2. The device according to claim 1, further comprising a coater cleaning unit (3), a coater filling unit (4), a central particulate material supply unit (6), a conveyor belt (7), an inspection unit (10), a print head cleaning unit with a spitting station (11), a capping station (12), a drop barrier (13), a collecting hopper (14), a conveyor line for waste (15), a collecting hopper in the unpacking area (16) and/or one or more channels (19).

3. The device according to claim 2,
wherein units of the coater peripheral units, including the coater cleaning unit (3), the coater filling unit (4), and/or the central particulate material supply unit (6), are disposed at the top in the coating direction, particularly preferably behind the construction field.

4. The device according to any one of claims 2 or 3, wherein units of the print head periphery units, including the inspection unit (10), the print head cleaning unit with the spitting station (11), and/or the capping station (12), are disposed at the bottom in the coating direction, particularly preferably below the construction field.

5. The device according to any one of claims 2, 3 or 4, wherein the central particulate material conveyor is disposed above the construction field for automatically preparing the start feedstock.

6. The device according to any one of the preceding claims, wherein a collecting hopper is disposed at the front below the construction field for collecting any excess particulate material.

7. The device according to any one of the preceding claims, wherein a conveyor line for excess particulate material is disposed on the underside of the machine.

8. The device according to claim 7, wherein the conveyor line has a central conveyor tube, which is used to empty the collecting hoppers on the front side and the collecting hopper in the unpacking area.

9. A method for producing three-dimensional models, using a device according to any one of claims 1 to 8.

10. The method according to claim 9, comprising preparing a start feedstock using the device according to claim 5.

## Revendications

1. Dispositif de production de modèles tridimensionnels, comprenant un enducteur (1) avec une ouverture d'éjection et au moins une tête d'impression (2) montée sur un axe d'impression, dans lequel l'enducteur se déplace vers le haut sur le champ de construction sous un angle oblique par rapport à l'horizontale pendant une course d'enduction dans la direction d'enduction et dans la direction de montée, l'ouverture d'éjection de l'enducteur étant disposée en haut dans la direction d'enduction et dans la direction de montée, et la tête d'impression étant disposée en alignement opposé sur l'axe d'impression dans la direction d'enduction derrière l'enducteur dans la direction opposée à la direction d'enduction et dans la direction d'abaissement,
**caractérisé en ce que**
la tête d'impression et l'enducteur sont disposés sur une paire d'axes commune.

2. Dispositif selon la revendication 1, comprenant en outre une unité de nettoyage d'enducteur (3), une unité de remplissage d'enducteur (4), une unité centrale d'alimentation en matière particulaire (6), une bande transporteuse (7), une unité d'inspection (10), une unité de nettoyage de tête d'impression avec un poste de crachage (11), un poste de fermeture (12), une barrière anti-goutte (13), une trémie de collecte (14), un convoyeur de déchets (15), une trémie de collecte de zone de déballage (16) et/ou un ou plusieurs canaux (19).

3. Dispositif selon la revendication 2,
dans lequel des unités faisant partie des unités périphériques de l'enducteur, comprenant l'unité de nettoyage d'enducteur (3), l'unité de remplissage d'enducteur (4) et/ou l'unité centrale d'alimentation en matière particulaire (6), sont disposées en haut dans la direction d'enduction, particulièrement de préférence derrière le champ de construction.

4. Dispositif selon l'une quelconque des revendications 2 ou 3, dans lequel des unités faisant partie des unités périphériques de la tête d'impression, comprenant l'unité d'inspection (10), l'unité de nettoyage de la tête d'impression avec le poste de crachage (11) et/ou le poste de fermeture (12), sont disposées en bas dans la direction d'enduction, particulièrement de préférence sous le champ de construction.

5. Dispositif selon l'une quelconque des revendications 2, 3 ou 4, dans lequel le convoyeur central de matière particulaire est disposé au-dessus du champ de construction pour la création automatique du vrac de départ.

6. Dispositif selon l'une quelconque des revendications précédentes, dans lequel une trémie de collecte est disposée à l'avant, sous le champ de construction, pour recueillir la matière particulaire en excès.

7. Dispositif selon l'une quelconque des revendications précédentes, dans lequel un convoyeur pour la matière particulaire en excès est disposé sur la face inférieure de la machine.

8. Dispositif selon la revendication 7, dans le conveyur comprend un tuyau de transport central qui est utilisé pour vider la trémie de collecte à l'avant et la trémie de collecte de la zone de déballage.

9. Procédé de production de modèles tridimensionnels, dans lequel on utilise un dispositif selon l'une quelconque des revendications 1 à 8.

10. Procédé selon la revendication 9, dans lequel un vrac de départ est préparée avec le dispositif selon la revendication 5.
